# EUROPEAN PATENT SPECIFICATION

(11) **EP 4 545 392 B1**
(45) Date of publication and mention of the grant of the patent: **29.04.2026**
(21) Application number: 23827037.5
(22) Date of filing: 12.06.2023
(51) Int. Cl.: B62M 6/65, B62M 11/16, B62M 11/18, F16H 3/66, F16H 37/06, B62M 6/55, B62M 11/14

(54) **POWER ASSIST UNIT FOR BICYCLE AND POWER ASSISTED BICYCLE**
HILFSANTRIEBSVORRICHTUNG FÜR FAHRRAD UND HILFSANTRIEBSFAHRRAD
UNITÉ D'ASSISTANCE ÉLECTRIQUE POUR BICYCLETTE ET BICYCLETTE À ASSISTANCE ÉLECTRIQUE

(30) Priority: 23.06.2022 JP 2022101062
(43) Date of publication of application: 30.04.2025
(73) Proprietor: JATCO Ltd, Shizuoka 417-8585 (JP)
(72) Inventor: OKAMOTO, Toshiyuki, Fuji-shi, Shizuoka 417-8585 (JP)
(74) Representative: Hoefer & Partner Patentanwälte mbB
(86) International application number: PCT/JP2023/021744
(87) International publication number: WO 2023/248851

(56) References cited:
- WO-A1-2020/245591
- CN-U- 206 754 297
- DE-B4- 102014 003 303
- JP-A- 2011 168 160
- JP-A- 2014 177 265
- JP-A- 2017 132 439

## Description

### TECHNICAL FIELD

The present invention relates to a power assist unit for a bicycle and a power assisted bicycle.

### BACKGROUND ART

Patent Document 1 discloses a power assisted bicycle including a transmission mechanism (planetary gear mechanism) having a transmission sun gear (sun gear), a transmission planetary gear (planetary gear), a transmission planetary carrier (carrier), and a transmission outer ring gear (ring gear), and a deceleration mechanism having a decelerator sun gear, a decelerator planetary gear, and a decelerator outer ring gear. In this power assisted bicycle, a drive force (pedaling force) from a rear sprocket is accelerated by the planetary gear mechanism and transmitted to a rear wheel, and a drive force (assist torque) from a drive motor (electric motor) is decelerated by the deceleration mechanism, and then accelerated by the planetary gear mechanism, and transmitted to the rear wheel.

### PRIOR ART DOCUMENT

### PATENT DOCUMENT

Patent Document 1: JP 2011-168160 A

### SUMMARY OF INVENTION

### PROBLEM TO BE SOLVED BY THE INVENTION

However, in the power assisted bicycle of Patent Document 1, the planetary gear mechanism accelerates the input pedaling force and transmits the pedaling force to the rear wheel. Therefore, when the assist torque of the motor cannot be obtained due to a dead battery or the like, a load may be greater than that of a normal bicycle without a power assist function.

The present invention has been made in view of the above problems, and an object of the present invention is to prevent a load of a rider from increasing when assist torque of an electric motor cannot be obtained.

### MEANS FOR SOLVING THE PROBLEM

According to the present invention, a power assist unit for a bicycle includes a small-diameter sun gear configured to receive a pedaling force from a rider; a large-diameter sun gear formed with a diameter larger than the small-diameter sun gear; a first planetary gear configured to mesh with the small-diameter sun gear; a second planetary gear configured to mesh with the first planetary gear and the large-diameter sun gear; a shared carrier configured to connect the first planetary gear and the second planetary gear to rotatably support the first planetary gear and the second planetary gear; a ring gear configured to mesh with the second planetary gear; a first brake configured to lock rotation of the shared carrier; a second brake configured to lock rotation of the large-diameter sun gear; a clutch configured to detachably couple the small-diameter sun gear and the shared carrier; an electric motor configured to assist a drive force in accordance with the pedaling force from the rider; a gear mechanism configured to transmit the drive force output from the electric motor to the ring gear; and a case fixed to the ring gear and configured to transmit at least one of the pedaling force and the drive force to a drive wheel of the bicycle.

### EFFECT OF THE INVENTION

According to the present invention, when the clutch couples the small-diameter sun gear and the shared carrier, the gear position is switched to a third position which is a highest position. In a state where the gear position is switched to the third position, an input and an output have same speeds. Therefore, a first position in which the first brake stops rotation of the shared carrier, and a second position in which the second brake stops rotation of the large-diameter sun gear can be set as low-side gear positions having a reduction ratio larger than that of the third position. Accordingly, by using the low-side gear positions, drive torque generated by the pedaling force of the rider can be increased by deceleration. Therefore, when assist torque from the electric motor cannot be obtained, a load of the rider can be prevented from increasing.

### BRIEF DESCRIPTION OF DRAWINGS

[FIG. 1] FIG. 1 is a side view illustrating an overview of a power assist unit for a bicycle and a power assisted bicycle according to an embodiment of the present invention.
[FIG. 2A] FIG. 2A is a skeleton diagram of the power assist unit and is a diagram showing a state where a gear position is switched to a first position.
[FIG. 2B] FIG. 2B is a collinear diagram of the power assist unit and is a diagram showing a state where the gear position is switched to the first position.
[FIG. 3A] FIG. 3A is a skeleton diagram of the power assist unit and is a diagram showing a state where the gear position is switched to a second position.
[FIG. 3B] FIG. 3B is a collinear diagram of the power assist unit and is a diagram showing a state where the gear position is switched to the second position.
[FIG. 4A] FIG. 4A is a skeleton diagram of the power assist unit and is a diagram showing a state where the gear position is switched to a third position.
[FIG. 4B] FIG. 4B is a collinear diagram of the power assist unit and is a diagram showing a state where the gear position is switched to the third position.
[FIG. 5] FIG. 5 is a cross-sectional view of the power assist unit and is a diagram showing a state where the gear position is switched to the first position.
[FIG. 6] FIG. 6 is a diagram showing a meshing relationship of gears in a planetary gear mechanism.
[FIG. 7] FIG. 7 is a cross-sectional view of the power assist unit and is a diagram showing a state where the gear position is switched to the second position.
[FIG. 8] FIG. 8 is a cross-sectional view of the power assist unit and is a diagram showing a state where the gear position is switched to the third position.

### DESCRIPTION OF EMBODIMENTS

Hereinafter, a power assist unit for a bicycle (hereinafter, simply referred to as a "power assist unit") 100 and a power assisted bicycle (hereinafter, simply referred to as a "bicycle") 1 including the power assist unit 100 according to an embodiment of the present invention will be described with reference to the drawings.

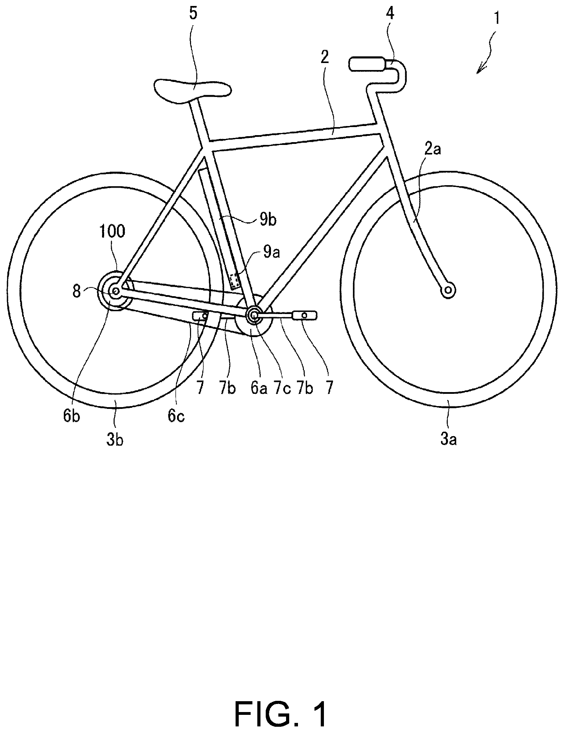

First, an overall configuration of the bicycle 1 will be described with reference to FIG. 1.

FIG. 1 is a side view illustrating an overview of the bicycle 1 including the power assist unit 100.

As shown in FIG. 1, the bicycle 1 includes a frame 2, a front wheel 3a, a rear wheel 3b as a drive wheel, a handlebar 4, a saddle 5, a drive sprocket 6a, a driven sprocket 6b as a sprocket, a chain 6c, a pair of pedals 7, a pair of crank arms 7b as crank portions, a crankshaft 7c, a support shaft 8, a controller 9a, a power storage unit 9b, and the power assist unit 100.

The bicycle 1 is ridden by a rider who sits astride the saddle 5 and pedals the crank arms 7b via the pedals 7. The bicycle 1 drives the rear wheel 3b by a pedaling force (drive torque) transmitted from the crank arms 7b to the crankshaft 7c and a drive force (assist torque) from the power assist unit 100 and having magnitude corresponding to the pedaling force.

The frame 2 is a so-called diamond frame that is substantially parallelogram-shaped when viewed from the side. The front wheel 3a and the rear wheel 3b are rotatably attached to the frame 2. The frame 2 has a front fork 2a that supports the front wheel 3a.

The front wheel 3a is steered left and right by the rider operating the handlebar 4 to pivot the front fork 2a.

The rear wheel 3b rotates around the support shaft 8. The driven sprocket 6b and the power assist unit 100 are attached to the rear wheel 3b.

The drive torque is transmitted to the driven sprocket 6b via the chain 6c wound between the driven sprocket 6b and the drive sprocket 6a to which the drive force from the crank arm 7b is input.

The power assist unit 100 generates the assist torque according to the pedaling force from the rider. The power assist unit 100 can be switched between three gear positions, that is, a first position (lowest position), a second position, and a third position (highest position). The power assist unit 100 will be described in detail later.

The pedals 7 are used by the rider to input the drive torque. The pedals 7 are connected to the crankshaft 7c via the crank arms 7b.

The support shaft 8 is attached to the frame 2. The support shaft 8 is non-rotatably provided with respect to the frame 2.

The controller 9a is implemented by a microcomputer including a CPU, a RAM, a ROM, an input and output interface, and the like. The controller 9a may also be implemented by a plurality of microcomputers. The controller 9a performs various processes by reading and executing programs stored in the ROM by the CPU. Specifically, the controller 9a calculates the assist torque based on an electrical signal corresponding to magnitude of a pedaling force received from a torque sensor (not shown) described later, and outputs a command signal to cause the electric motor 70 to generate the assist torque.

The power storage unit 9b is a chargeable and dischargeable secondary battery such as a nickel-metal hydride battery or a lithium-ion battery. The power storage unit 9b is provided to be removable from the frame 2.

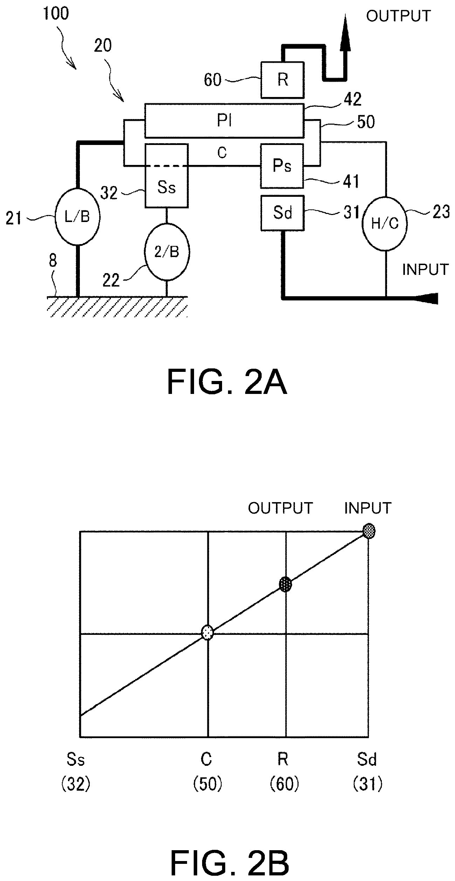

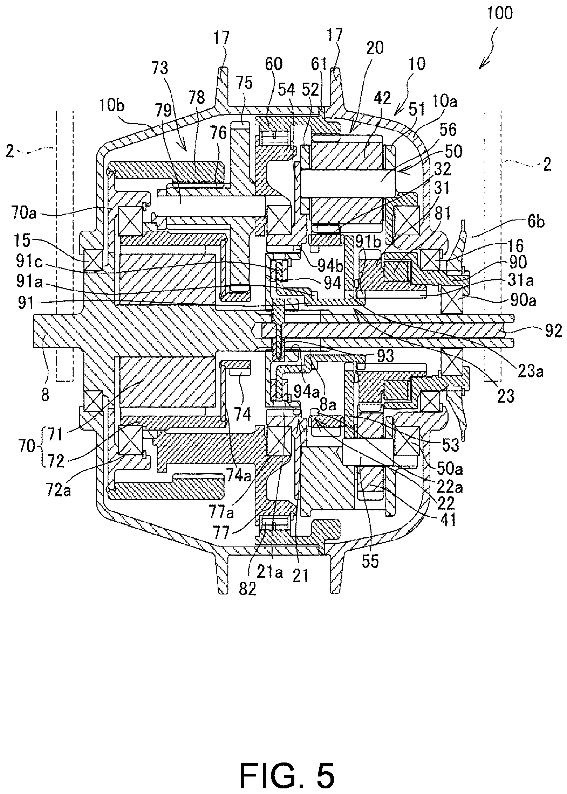

Next, a configuration of the power assist unit 100 and the gear positions will be described with reference to FIGS. 2A to 4B. Here, only the input and the output of the pedaling force of the rider will be described, and the input and the output of the assist torque from the electric motor 70 will be described in detail later with reference to FIGS. 5 to 8.

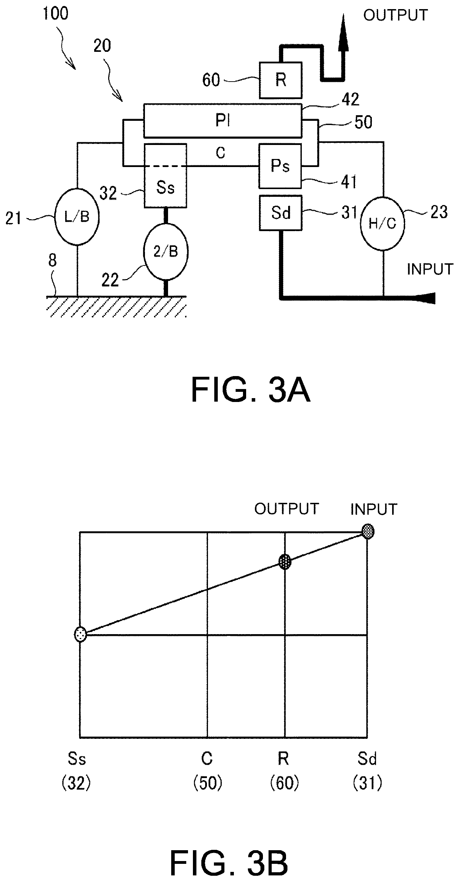

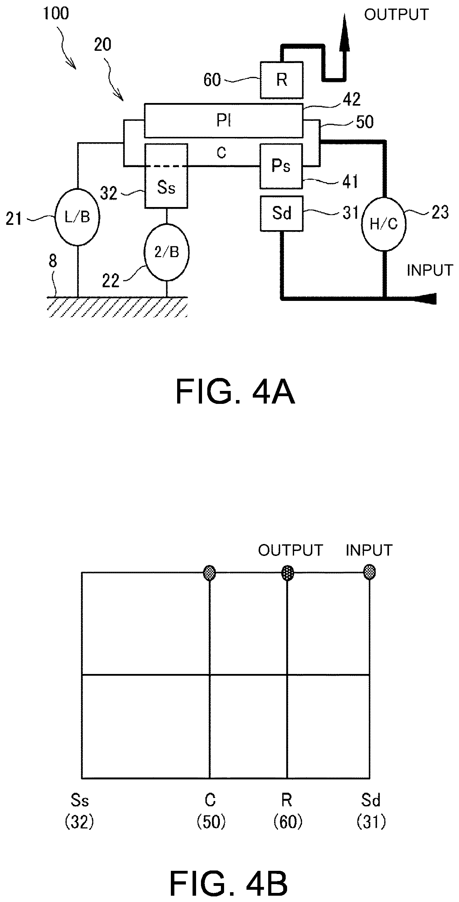

FIG. 2A is a skeleton diagram of the power assist unit 100 and is a diagram showing a state where the gear position is switched to the first position. FIG. 2B is a collinear diagram of the power assist unit 100 and is a diagram showing a state where the gear position is switched to the first position. FIG. 3A is a skeleton diagram of the power assist unit 100 and is a diagram showing a state where the gear position is switched to the second position. FIG. 3B is a collinear diagram of the power assist unit 100 and is a diagram showing a state where the gear position is switched to the second position. FIG. 4A is a skeleton diagram of the power assist unit 100 and is a diagram showing a state where the gear position is switched to the third position. FIG. 4B is a collinear diagram of the power assist unit 100 and is a diagram showing a state where the gear position is switched to the third position.

As shown in FIG. 2A, the power assist unit 100 includes a planetary gear mechanism 20, a low brake 21 as a first brake, a second brake 22 as a second brake, and a clutch 23.

The planetary gear mechanism 20 includes a small-diameter sun gear 31, a large-diameter sun gear 32, a short planetary gear 41 as a first planetary gear, a long planetary gear 42 as a second planetary gear, a carrier 50 as a shared carrier, and a ring gear 60.

The pedaling force from the rider is input to the small-diameter sun gear 31. The large-diameter sun gear 32 is formed with a diameter larger than that of the small-diameter sun gear 31.

The short planetary gear 41 meshes with the small-diameter sun gear 31. The long planetary gear 42 meshes with the short planetary gear 41 and with the large-diameter sun gear 32.

The carrier 50 connects the short planetary gear 41 and the long planetary gear 42 to rotatably support the short planetary gear 41 and the long planetary gear 42.

The ring gear 60 meshes with the long planetary gear 42. A case 10 (see FIG. 5) that rotatably supports the rear wheel 3b with respect to the support shaft 8 is fixed to the ring gear 60.

The low brake 21 can lock rotation of the carrier 50. The second brake 22 can lock rotation of the large-diameter sun gear 32. The clutch 23 detachably couples the small-diameter sun gear 31 and the carrier 50.

As shown in FIG. 2A, in the state where the gear position is switched to the first position which is a lowest position, the low brake 21 fixes the carrier 50 to the support shaft 8 to non-rotatably lock the carrier 50. The drive torque received from the driven sprocket 6b is transmitted from the small-diameter sun gear 31 to the short planetary gear 41, and then transmitted from the short planetary gear 41 to the ring gear 60 via the long planetary gear 42. In this case, since the carrier 50 is non-rotatably locked, the pedaling force received from the small-diameter sun gear 31 is decelerated and transmitted from the ring gear 60 to the rear wheel 3b. Therefore, as shown in FIG. 2B, the pedaling force of the rider is transmitted to the rear wheel 3b with the largest reduction ratio.

As shown in FIG. 3A, in a state where the gear position is switched to the second position, the second brake 22 fixes the large-diameter sun gear 32 to the support shaft 8 to non-rotatably lock the large-diameter sun gear 32. The drive torque received from the driven sprocket 6b is transmitted from the small-diameter sun gear 31 to the short planetary gear 41, and then transmitted from the short planetary gear 41 to the ring gear 60 via the long planetary gear 42. In this case, since the large-diameter sun gear 32 is non-rotatably locked, the pedaling force received from the small-diameter sun gear 31 is decelerated and transmitted from the ring gear 60 to the rear wheel 3b. Therefore, as shown in FIG. 3B, the pedaling force of the rider is transmitted to the rear wheel 3b with a reduction ratio smaller than that when the gear position is the first position.

As shown in FIG. 4A, in the state where the gear position is switched to the third position which is a highest speed, the clutch 23 connects the small-diameter sun gear 31 and the carrier 50 to rotate the small-diameter sun gear 31 and the carrier 50 together. The drive torque received from the driven sprocket 6b is transmitted from the small-diameter sun gear 31 to the short planetary gear 41, transmitted from the short planetary gear 41 to the ring gear 60 via the long planetary gear 42, also transmitted to the carrier 50 via the clutch 23, and transmitted from the carrier 50 to the ring gear 60 via the long planetary gear 42. In this case, the small-diameter sun gear 31 and the carrier 50 are connected to rotate together, and thus rotation speeds of the small-diameter sun gear 31 and the ring gear 60 become the same, as shown in FIG. 4B. Therefore, the gear position is a reduction position when the gear position is the first position or the second position, whereas when the gear position is the third position, the pedaling force received from the small-diameter sun gear 31 is transmitted from the ring gear 60 to the rear wheel 3b at the same speed without being decelerated.

As described above, when the clutch 23 couples the small-diameter sun gear 31 and the carrier 50, the gear position is switched to the third position which is the highest position. In the state where the gear position is switched to the third position, the input and the output have same speeds. Therefore, the first position in which the low brake 21 stops the rotation of the carrier 50, and the second position in which the second brake 22 stops the rotation of the large-diameter sun gear 32 can be set as low-side gear positions each having a reduction ratio larger than that of the third position.

Therefore, when the assist torque from the electric motor 70 cannot be obtained due to the power storage unit 9b (described later) running out of charge or the like, the rider can use the low-side gear positions to increase the drive torque generated by the pedaling force by deceleration. Therefore, when the assist torque from the electric motor 70 cannot be obtained, a load of the rider can be prevented from increasing. Specifically, when the assist torque is obtained, the load of the rider is low, and thus the rear wheel 3b, which is the drive wheel, is often set to the highest position, at which rotation is fastest, with respect to the rotation of the pedals 7, but when the assist torque cannot be obtained, by shifting the gear position from the highest position to the low-side gear position, the torque is increased due to the reduction ratio, and the load of the rider can be prevented from increasing. In the third position which is the highest position and is often selected when the assist torque is obtained, the clutch 23 fixes the small-diameter sun gear 31 and the carrier 50 to rotate the small-diameter sun gear 31 and the carrier 50 together, and thus torque transmission by the gears of the planetary gear mechanism 20 is prevented, wear of the planetary gear mechanism 20 can be reduced, and durability of the power assist unit 100 can be improved.

Next, a specific configuration of the power assist unit 100 and the gear positions will be described with reference to FIGS. 5 to 8.

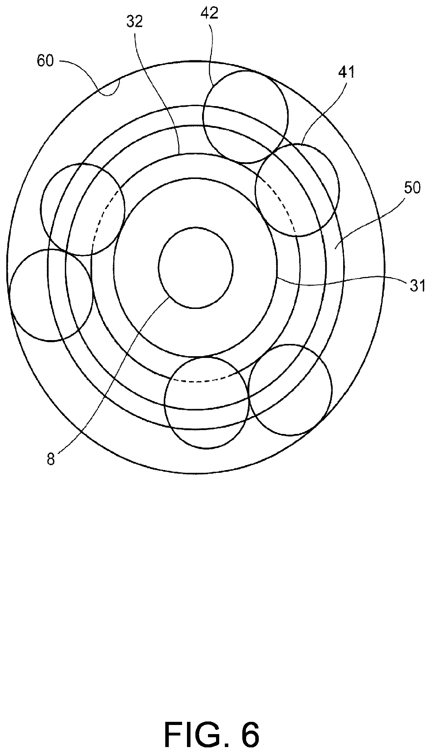

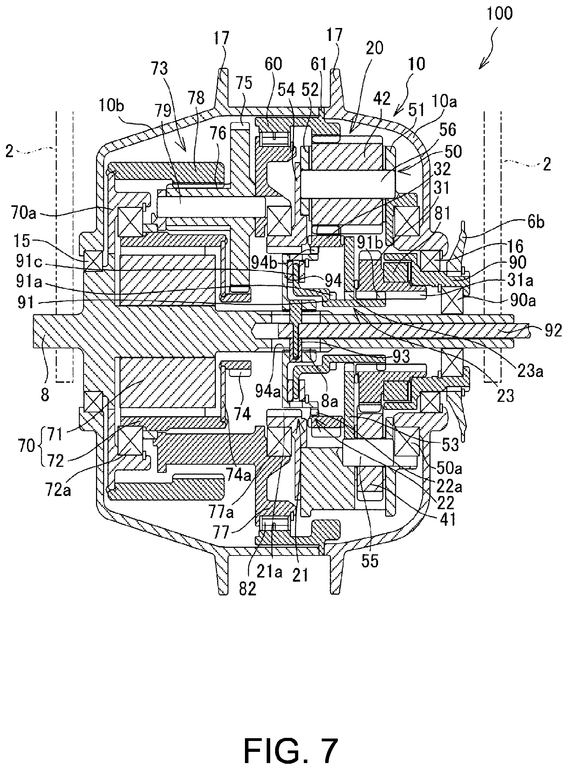

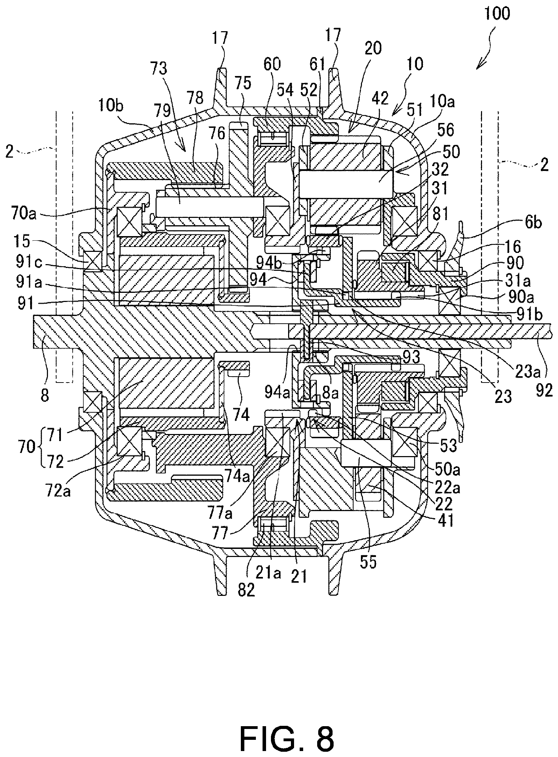

FIG. 5 is a cross-sectional view of the power assist unit 100 and is a diagram showing the state where the gear position is switched to the first position. FIG. 6 is a diagram showing a meshing relationship of the gears in the planetary gear mechanism 20. FIG. 7 is a cross-sectional view of the power assist unit 100 and is a diagram showing the state where the gear position is switched to the second position. FIG. 8 is a cross-sectional view of the power assist unit 100 and is a diagram showing the state where the gear position is switched to the third position.

As shown in FIG. 5, the power assist unit 100 includes the case 10, the planetary gear mechanism 20, the low brake 21 as the first brake, the second brake 22 as the second brake, the clutch 23, the electric motor 70, a gear mechanism 73, a power input member 90, a one-way clutch 81, a one-way clutch 82, a first sliding engagement member 91, a transmission shaft 92, and a second sliding engagement member 94.

The case 10 rotatably supports the rear wheel 3b with respect to the support shaft 8. The case 10 is fixed to the ring gear 60 of the planetary gear mechanism 20.

The case 10 rotatably supports the rear wheel 3b with respect to the support shaft 8, rotatably supports the ring gear 60 of the planetary gear mechanism 20 with respect to the support shaft 8 around an axis of the ring gear 60, and rotates together with the ring gear 60 with respect to the support shaft 8. The case 10 rotates, around the support shaft 8, together with the rear wheel 3b with respect to the support shaft 8. The rear wheel 3b is attached to an outer circumference of the case 10 via spokes (not shown).

The case 10 has a first case 10a, a second case 10b, and a plurality of bolts (not shown) as fastening members.

The first case 10a is formed in a substantially cup shape with a surface being open almost entirely in an axial direction. The first case 10a is rotatably supported on an outer circumference of the power input member 90 via a bearing 16 with respect to the support shaft 8. The first case 10a houses the planetary gear mechanism 20 and the one-way clutch 81. The first case 10a is provided such that an opening faces the second case 10b. One flange 17 to which the spokes are connected protrudes from an outer circumference of the first case 10a.

The second case 10b is formed in a substantially cup shape with the other surface being open almost entirely in the axial direction. The second case 10b is rotatably supported on an outer circumference of the support shaft 8 via a bearing 15 with respect to the support shaft 8. The second case 10b houses the electric motor 70 and the gear mechanism 73. The second case 10b is provided such that an opening faces the opening of the first case 10a, and is fastened to the first case 10a by a bolt while sandwiching a flange 61 protruding from an outer circumference of the ring gear 60. The other flange 17 to which the spokes are connected protrudes from an outer circumference of the second case 10b.

Accordingly, in a state where the planetary gear mechanism 20 and the one-way clutch 81 are housed in the first case 10a, and the electric motor 70 and the gear mechanism 73 are housed in the second case 10b, the power assist unit 100 can be assembled simply by butting the openings of the first case 10a and the second case 10b together and fastening the openings with the bolt.

The planetary gear mechanism 20 includes the small-diameter sun gear 31, the large-diameter sun gear 32, the short planetary gear 41, the long planetary gear 42, the carrier 50, and the ring gear 60.

As shown in FIG. 6, the planetary gear mechanism 20 includes the small-diameter sun gear 31, the large-diameter sun gear 32, the short planetary gear 41, the long planetary gear 42, the carrier 50, and the ring gear 60 as rotation elements. The planetary gear mechanism 20 functions as a double-pinion type planetary gear mechanism.

The carrier 50 rotatably supports the short planetary gear 41 and the long planetary gear 42. The short planetary gear 41 meshes with both the small-diameter sun gear 31 and the long planetary gear 42. The long planetary gear 42 meshes with the large-diameter sun gear 32 and the ring gear 60. The large-diameter sun gear 32 is adjacent to the small-diameter sun gear 31 in the axial direction. The long planetary gear 42 also meshes with the short planetary gear 41. The short planetary gear 41 and the long planetary gear 42 are disposed adjacent to each other in a circumferential direction and mesh with each other.

As shown in FIG. 5, a part of the small-diameter sun gear 31 is provided on an inner circumference of the power input member 90 via the one-way clutch 81. The small-diameter sun gear 31 is provided to face the power input member 90. The small-diameter sun gear 31 meshes with the short planetary gear 41. The small-diameter sun gear 31 has a spline 31a as a first engagement portion on an inner circumference. The small-diameter sun gear 31 transmits power to the short planetary gear 41 at each gear position.

The large-diameter sun gear 32 is arranged parallel to the small-diameter sun gear 31 in the axial direction, and sandwiches the small-diameter sun gear 31 between the large-diameter sun gear 32 and the power input member 90. The large-diameter sun gear 32 has an outer diameter larger than that of the small-diameter sun gear 31. The large-diameter sun gear 32 meshes with the long planetary gear 42. Inner teeth 22a of the second brake 22 are formed on an inner circumference of the large-diameter sun gear 32. When the second brake 22 operates and the gear position is switched to the second position having a reduction ratio smaller than that of the first position, the large-diameter sun gear 32 is non-rotatably locked by the second brake 22.

The short planetary gear 41 is supported by the carrier 50 via a support shaft 55. The short planetary gear 41 meshes with the small-diameter sun gear 31. The short planetary gear 41 rotates around its own axis with respect to the carrier 50 and revolves around an outer circumference of the small-diameter sun gear 31. The power is transmitted from the small-diameter sun gear 31 to the short planetary gear 41 at each gear position.

The long planetary gear 42 is supported by the carrier 50 via a support shaft 56. The long planetary gear 42 is provided to face an inner surface of the first case 10a in the circumferential direction. The long planetary gear 42 meshes with the large-diameter sun gear 32. The long planetary gear 42 rotates around its own axis with respect to the carrier 50, and revolves around an outer circumference of the large-diameter sun gear 32. The long planetary gear 42 is formed with a length greater than that of the short planetary gear 41 in the axial direction. The long planetary gear 42 transmits the power to the ring gear 60 regardless of the gear position.

The carrier 50 is rotatably supported within the first case 10a via a bearing 50a. The carrier 50 is connected to the support shaft 55, and rotatably supports the short planetary gear 41 (around its own axis) via the support shaft 55. The carrier 50 is connected to the support shaft 56, and rotatably supports the long planetary gear 42 (around its own axis) via the support shaft 56. The carrier 50 rotates around the support shaft 8 as the short planetary gear 41 and the long planetary gear 42 revolve.

Accordingly, the pedaling force from the rider is transmitted from the inner circumference to the outer circumference in the order of the small-diameter sun gear 31, the short planetary gear 41, the long planetary gear 42, the ring gear 60, the case 10, and the rear wheel 3b. Therefore, compared with a case where the drive force is received from the ring gear 60 on the outside of the carrier 50 and output to the case 10 on the outside of the ring gear 60, an input path and an output path of the drive force can be made simpler. Therefore, the power assist unit 100 can be made compact.

The carrier 50 has a first support plate 51, a second support plate 52, a third support plate 53, and a fourth support plate 54.

The first support plate 51 is a substantially annular plate that supports one end of the support shaft 55 for rotatably supporting the short planetary gear 41, and supports one end of the support shaft 56 for rotatably supporting the long planetary gear 42. The first support plate 51 is rotatably supported within the first case 10a via the bearing 50a.

The second support plate 52 is a substantially annular plate that supports the other end of the support shaft 56 for rotatably supporting the long planetary gear 42 around its own axis. The second support plate 52 is provided coaxially with the first support plate 51. The second support plate 52 has an outer circumference connected to the first support plate 51.

The third support plate 53 is a substantially annular plate that supports the other end of the support shaft 55 for rotatably supporting the short planetary gear 41 around its own axis. The third support plate 53 is provided coaxially with the first support plate 51 and the second support plate 52. The third support plate 53 is provided between the first support plate 51 and the second support plate 52 in the axial direction. Inner teeth 23a of the clutch 23 are formed on an inner circumference of the third support plate 53.

The fourth support plate 54 is attached to the second support plate 52. The fourth support plate 54 is provided on a side surface of the second support plate 52 on which the long planetary gear 42 is not provided. The fourth support plate 54 is a substantially annular plate. The fourth support plate 54 is provided coaxially with the first support plate 51, the second support plate 52, and the third support plate 53. Inner teeth 21a of the low brake 21 are formed on an inner circumference of the fourth support plate 54.

The ring gear 60 is supported to rotate together with the case 10 with respect to the support shaft 8. The ring gear 60 meshes with the long planetary gear 42. The ring gear 60 supports a carrier 77 of the gear mechanism 73 via the one-way clutch 82 (described later). The ring gear 60 has the flange 61 protruding from the outer circumference. The ring gear 60 is attached to the case 10 with the flange 61 sandwiched between the first case 10a and the second case 10b.

The low brake 21 is a dog brake including the inner teeth 21a provided on the inner circumference of the fourth support plate 54 and outer teeth 94b provided on an outer circumference of the second sliding engagement member 94. The low brake 21 operates when the second sliding engagement member 94 slides and the inner teeth 21a and the outer teeth 94b mesh with each other, and non-rotatably locks the carrier 50 with respect to the support shaft 8.

The second brake 22 is a dog brake including the inner teeth 22a provided on the inner circumference of the large-diameter sun gear 32 and the outer teeth 94b provided on the outer circumference of the second sliding engagement member 94. The second brake 22 operates when the second sliding engagement member 94 slides and the inner teeth 22a and the outer teeth 94b mesh with each other, and non-rotatably locks the large-diameter sun gear 32 with respect to the support shaft 8.

The clutch 23 is a dog clutch including the inner teeth 23a provided on the inner circumference of the third support plate 53 and outer teeth 91a provided on an outer circumference of the first sliding engagement member 91. The clutch 23 operates when the first sliding engagement member 91 slides and the inner teeth 23a and the outer teeth 91a mesh with each other, connects the small-diameter sun gear 31 and the carrier 50 to rotate the small-diameter sun gear 31 and the carrier 50 together.

The electric motor 70 assists the drive force in accordance with the pedaling force from the rider. The electric motor 70 is driven by a command from the controller 9a. The electric motor 70 generates assist torque by the power supplied from the power storage unit 9b.

The electric motor 70 has a stator 71 and a rotor 72. The stator 71 is non-rotatably supported on the outer circumference of the support shaft 8. The rotor 72 is provided on an outer circumference of the stator 71 and rotatably supported on an inner circumference of a motor support member 70a via a bearing 72a. The rotor 72 rotates with respect to the stator 71. A sun gear 74 (described later) of the gear mechanism 73 is attached to the rotor 72 via a connection member 74a. The rotor 72 rotates together with the sun gear 74.

The motor support member 70a is non-rotatably supported on the support shaft 8. The motor support member 70a rotatably supports the rotor 72 via the bearing 72a. The motor support member 70a non-rotatably supports a ring gear 78 (described later) of the gear mechanism 73.

The torque sensor detects the drive torque generated when the rider pedals the crank arms 7b via the pedals 7 and transmitted to the crankshaft 7c. The torque sensor is, for example, a non-contact torque sensor that detects torque based on torsion of the crankshaft 7c measured magnetically.

The gear mechanism 73 transmits the drive force output from the electric motor 70 to the ring gear 60. The gear mechanism 73 includes the sun gear 74, a large-diameter planetary gear 75, a small-diameter planetary gear 76, the carrier 77, and the ring gear 78.

The sun gear 74 is rotatably provided on the outer circumference of the support shaft 8. The sun gear 74 transmits the assist torque of the electric motor 70 to the large-diameter planetary gear 75.

The large-diameter planetary gear 75 is rotatably supported by the carrier 77 via a support shaft 79 around its own axis. The large-diameter planetary gear 75 meshes with the sun gear 74. The large-diameter planetary gear 75 is formed with an outer diameter larger than that of the small-diameter planetary gear 76. The assist torque from the electric motor 70 is transmitted to the large-diameter planetary gear 75 via the sun gear 74 regardless of the gear position.

The small-diameter planetary gear 76 is rotatably supported by the carrier 77 via the support shaft 79 around its own axis. The small-diameter planetary gear 76 is arranged parallel to the large-diameter planetary gear 75 in the axial direction, and is closer to a bottom surface of the second case 10b (the bottom surface of the second case 10b formed in a substantially cup shape with an opening) than the large-diameter planetary gear 75. The small-diameter planetary gear 76 is arranged coaxially with the large-diameter planetary gear 75 to rotate together. The small-diameter planetary gear 76 meshes with an inner circumference of the ring gear 78.

The carrier 77 is rotatably supported on the fourth support plate 54 of the carrier 50 via a bearing 77a. The carrier 77 is provided on an inner circumference of the ring gear 60 via the one-way clutch 82.

The ring gear 78 is non-rotatably supported on the support shaft 8 via the motor support member 70a. The ring gear 78 meshes with the small-diameter planetary gear 76.

The one-way clutch 81 is provided between the inner circumference of the power input member 90 and an outer circumference of a cylindrical protrusion protruding toward the driven sprocket 6b of the small-diameter sun gear 31. The one-way clutch 81 switches between a state where the pedaling force from the rider is transmitted to the small-diameter sun gear 31 and a state where the rotation of the small-diameter sun gear 31 is not transmitted to the pedals 7. The one-way clutch 81 transmits the pedaling force from the rider to the small-diameter sun gear 31 via the power input member 90. The one-way clutch 81 does not transmit the rotation of the small-diameter sun gear 31 to the pedals 7.

In this way, by providing the one-way clutch 81, when a rotation speed of the power input member 90 is faster than a rotation speed of the small-diameter sun gear 31, the rotation of the small-diameter sun gear 31 is not transmitted to the pedals 7, so that the pedals 7 can be stopped when the rear wheel 3b is rotating at a high speed due to inertia.

The one-way clutch 82 is provided between the inner circumference of the ring gear 60 and an outer circumference of the carrier 77. The one-way clutch 82 switches between a state where the drive force of the electric motor 70 is transmitted to the ring gear 60 and a state where the rotation of the ring gear 60 is not transmitted to the electric motor 70. The one-way clutch 82 transmits the drive force generated by the electric motor 70 to the ring gear 60. The one-way clutch 82 does not transmit the rotation of the ring gear 60 to the electric motor 70.

The power input member 90 is provided on an inner circumference of the driven sprocket 6b to which the pedaling force is input. The power input member 90 is a cylindrical member rotatably provided on the outer circumference of the support shaft 8 via a bearing 90a. The power input member 90 transmits the drive torque received from the driven sprocket 6b to the small-diameter sun gear 31 via the one-way clutch 81.

The transmission shaft 92 can slide inside the support shaft 8 in the axial direction, and switches to selectively operate the low brake 21, the second brake 22, and the clutch 23 depending on a sliding position (a position of the transmission shaft 92 inside the support shaft 8, a position where the transmission shaft 92 stops inside the support shaft 8 as a result of the transmission shaft 92 moving in the axial direction of the support shaft 8).

Accordingly, the gear position can be changed simply by changing the position of the transmission shaft 92 in the axial direction based on an operation of the rider. Therefore, for example, the rider can change the gear position by operating a lever or the like in the same way as shifting of a normal bicycle.

The connection member 93 is provided perpendicular to a central axis of the transmission shaft 92 and engages with the transmission shaft 92 in the axial direction. The connection member 93 connects the transmission shaft 92 and the second sliding engagement member 94, and moves the transmission shaft 92 and the second sliding engagement member 94 together in the axial direction.

The first sliding engagement member 91 is provided slidably in the axial direction of the support shaft 8 with respect to the small-diameter sun gear 31. The first sliding engagement member 91 switches an operation state of the clutch 23 depending on the sliding position. The first sliding engagement member 91 engages with the small-diameter sun gear 31 and rotates together with the small-diameter sun gear 31. The first sliding engagement member 91 includes the outer teeth 91a, a spline 91b as a second engagement portion, and a locking portion 91c.

The spline 91b engages with the spline 31a of the small-diameter sun gear 31. The spline 91b is formed with a length smaller than that of the spline 31a in the axial direction. The spline 91b is movable in the axial direction with respect to the spline 31a while engaging with the spline 31a.

The locking portion 91c is locked so as not to be movable with respect to the second sliding engagement member 94 in the axial direction. The locking portion 91c is rotatable with respect to the second sliding engagement member 94 in the circumferential direction. Accordingly, the second sliding engagement member 94 is non-rotatably supported on the support shaft 8, whereas the first sliding engagement member 91 is rotatably supported on the support shaft 8.

The second sliding engagement member 94 moves in the axial direction of the support shaft 8 together with the first sliding engagement member 91 as the transmission shaft 92 slides, and is non-rotatably supported by the support shaft 8. The second sliding engagement member 94 switches operation states of the low brake 21 and the second brake 22 depending on the sliding position. The second sliding engagement member 94 includes a spline 94a as a third engagement portion and the outer teeth 94b.

The second sliding engagement member 94 is a member including two coaxial cylindrical portions. The spline 94a is formed on an inner circumferential surface of a small-diameter cylindrical portion located on an inner circumferential side of the second sliding engagement member 94. The outer teeth 94b are formed on an outer circumferential surface of a large-diameter cylindrical portion located on an outer circumferential side of the second sliding engagement member 94.

The spline 94a engages with a spline 8a as a fourth engagement portion formed on the outer circumference of the support shaft 8. The spline 94a is formed to have a length smaller than that of the spline 8a in the axial direction. The spline 94a is movable in the axial direction with respect to the spline 8a while engaging with the spline 8a.

By providing the first sliding engagement member 91 and the second sliding engagement member 94 in this way, it is possible to selectively operate any one of the low brake 21, the second brake 22, and the clutch 23 simply by sliding the first sliding engagement member 91 and the second sliding engagement member 94 in the axial direction.

Next, the gear positions of the power assist unit 100 will be described.

In the state shown in FIG. 5, the gear position of the power assist unit 100 is shifted to the first position. In this case, since the inner teeth 21a and the outer teeth 94b mesh with each other, the low brake 21 fixes the carrier 50 to the support shaft 8 to non-rotatably lock the carrier 50. The drive torque received from the driven sprocket 6b is transmitted from the small-diameter sun gear 31 to the short planetary gear 41, and then transmitted from the short planetary gear 41 to the ring gear 60 via the long planetary gear 42. In this case, since the carrier 50 is non-rotatably locked, the pedaling force received from the small-diameter sun gear 31 is decelerated and transmitted from the ring gear 60 to the rear wheel 3b. Therefore, the pedaling force of the rider is transmitted to the rear wheel 3b with the largest reduction ratio.

From this state, when the transmission shaft 92 slides in a direction of retracting from the case 10 (moves in the axial direction of the support shaft 8) based on an operation of the rider, the first sliding engagement member 91 and the second sliding engagement member 94 move toward the driven sprocket 6b along the axial direction of the support shaft 8. Accordingly, the outer teeth 94b of the second sliding engagement member 94 disengage from the inner teeth 21a of the fourth support plate 54 and mesh with the inner teeth 22a of the large-diameter sun gear 32. Accordingly, the state is switched to a state shown in FIG. 7.

In the state shown in FIG. 7, the gear position of the power assist unit 100 is shifted to the second position. In this case, since the inner teeth 22a and the outer teeth 94b mesh with each other, the second brake 22 fixes the large-diameter sun gear 32 to the support shaft 8 to non-rotatably lock the large-diameter sun gear 32. The drive torque received from the driven sprocket 6b is transmitted from the small-diameter sun gear 31 to the short planetary gear 41, and then transmitted from the short planetary gear 41 to the ring gear 60 via the long planetary gear 42. In this case, since the large-diameter sun gear 32 is non-rotatably locked, the pedaling force received from the small-diameter sun gear 31 is decelerated and transmitted from the ring gear 60 to the rear wheel 3b. Therefore, the pedaling force of the rider is transmitted to the rear wheel 3b with a reduction ratio smaller than that when the gear position is the first position.

For example, when traveling up a steep hill, the rider can switch the gear position to the second position, which has a gear ratio on a reduction side with respect to a gear ratio of the third position, to reduce the required pedaling force. Therefore, the load of the rider can be prevented from increasing.

From this state, when the transmission shaft 92 further slides in the direction of retracting from the case 10 based on an operation of the rider, the first sliding engagement member 91 and the second sliding engagement member 94 move toward the driven sprocket 6b along the axial direction of the support shaft 8. Accordingly, the outer teeth 94b of the second sliding engagement member 94 disengage from the inner teeth 22a of the large-diameter sun gear 32, and the outer teeth 91a of the first sliding engagement member 91 mesh with the inner teeth 23a of the third support plate 53. Accordingly, the state is switched to a state shown in FIG. 8.

In the state shown in FIG. 8, the gear position of the power assist unit 100 is shifted to the third position. In this case, since the inner teeth 23a and the outer teeth 91a mesh with each other, the clutch 23 connects the small-diameter sun gear 31 and the carrier 50 to rotate the small-diameter sun gear 31 and the carrier 50 together. The drive torque received from the driven sprocket 6b is transmitted from the small-diameter sun gear 31 to the short planetary gear 41, transmitted from the short planetary gear 41 to the ring gear 60 via the long planetary gear 42, also transmitted to the carrier 50 via the clutch 23, and transmitted from the carrier 50 to the ring gear 60 via the long planetary gear 42. In this case, the small-diameter sun gear 31 and the carrier 50 are connected to rotate together, and thus the rotation speeds of the small-diameter sun gear 31 and the ring gear 60 become the same. Therefore, the gear position is a reduction position when the gear position is the first position or the second position, whereas when the gear position is the third position, the pedaling force received from the small-diameter sun gear 31 is transmitted from the ring gear 60 to the rear wheel 3b at the same speed without being decelerated.

In this way, the power assist unit 100 is configured such that the input and the output have same speeds in a third speed, and each of a first speed and a second speed has a gear ratio on the reduction side. Accordingly, in the state where the gear position is switched to the third speed which is the highest position and is used most frequently, the pedaling force of the rider is transmitted to the case 10 without the relative rotation of components of the planetary gear mechanism 20. Therefore, wear of the gear portions of the planetary gear mechanism 20 can be reduced, durability of the power assist unit 100 can be improved.

When the pedaling force from the rider is accelerated and transmitted to the rear wheel 3b at a certain gear position, large assist torque is required, and thus there is a risk that an amount of power consumed by the electric motor 70 increases accordingly. In contrast, the power assist unit 100 maintains the same speed even at the third speed which is the highest position, and does not accelerate the pedaling force from the rider, and thus the required assist torque can be reduced. Therefore, according to the power assist unit 100, power consumption can be reduced, and a range of the bicycle 1 can be increased.

The configuration and effects of the present embodiment described above are described together below.

(1) (9) The power assist unit 100 includes the small-diameter sun gear 31 that receives the pedaling force from the rider, the large-diameter sun gear 32 formed with a diameter larger than that of the small-diameter sun gear 31, the short planetary gear 41 that meshes with the small-diameter sun gear 31, the long planetary gear 42 that meshes with the short planetary gear 41 and the large-diameter sun gear 32, the carrier 50 that connects the short planetary gear 41 and the long planetary gear 42 to rotatably support the short planetary gear 41 and the long planetary gear 42, the ring gear 60 that meshes with the long planetary gear 42, the low brake 21 that locks rotation of the carrier 50, the second brake 22 that locks the rotation of the large-diameter sun gear 32, the clutch 23 that detachably couples the small-diameter sun gear 31 and the carrier 50, the electric motor 70 that assists the drive force in accordance with the pedaling force from the rider, the gear mechanism 73 that transmits the drive force output from the electric motor 70 to the ring gear 60, and the case 10 that is fixed to the ring gear 60 and transmits at least one of the pedaling force and the drive force to the rear wheel 3b.

According to such a configuration, when the clutch 23 couples the small-diameter sun gear 31 and the carrier 50, the gear position is switched to the third position which is the highest position. In the state where the gear position is switched to the third position, the input and the output have the same speeds. Therefore, the first position in which the low brake 21 stops the rotation of the carrier 50, and the second position in which the second brake 22 stops the rotation of the large-diameter sun gear 32 can be set as low-side gear positions each having a reduction ratio larger than that of the third position. Accordingly, by using the low-side gear positions, drive torque generated by the pedaling force of the rider can be increased by deceleration. Therefore, when the assist torque from the electric motor 70 cannot be obtained, a load of the rider can be prevented from increasing.

In addition, the pedaling force from the rider is transmitted from the inner circumference to the outer circumference in the order of the small-diameter sun gear 31, the short planetary gear 41, the long planetary gear 42, the ring gear 60, the case 10, and the rear wheel 3b. Therefore, compared with the case where the drive force is received from the ring gear 60 on the outside of the carrier 50 and output to the case 10 on the outside of the ring gear 60, the input path and the output path of the drive force can be made simpler. Therefore, the power assist unit 100 can be made compact.

(2) The case 10 of the power assist unit 100 rotatably supports the rear wheel 3b with respect to the support shaft 8.

According to this configuration, the pedaling force of the rider is input to the small-diameter sun gear 31 of the power assist unit 100 via the drive sprocket 6a and the driven sprocket 6b. The drive force transmitted from the drive sprocket 6a to the driven sprocket 6b is accelerated, and thus the torque input to the small-diameter sun gear 31 is reduced accordingly. Therefore, it is possible to reduce resistance of each component of the power assist unit 100, and to prevent the power assist unit 100 from becoming large.

(3) The power assist unit 100 further includes the one-way clutch 81 that switches between the state where the pedaling force from the rider is transmitted to the small-diameter sun gear 31 and the state where the rotation of the small-diameter sun gear 31 is not transmitted to the pedals.

According to this configuration, by providing the one-way clutch 81, in a state where the small-diameter sun gear 31 is rotating faster than the pedals 7, the rotation of the small-diameter sun gear 31 is not transmitted to the pedals 7, and thus the pedals 7 can be stopped when the rear wheel 3b is rotating at a high speed due to inertia.

(4) The power assist unit 100 further includes the transmission shaft 92 that can slide inside the support shaft 8 in the axial direction and switches to selectively operate the low brake 21, the second brake 22, and the clutch 23.

According to this configuration, the gear position can be changed simply by changing the position of the transmission shaft 92 in the axial direction based on an operation of the rider. Therefore, for example, the rider can change the gear position by operating a lever or the like in the same way as shifting of a normal bicycle.

(5) The power assist unit 100 further includes the first sliding engagement member 91 that is provided slidably in the axial direction with respect to the small-diameter sun gear 31 and engages with the small-diameter sun gear 31 to rotate together with the small-diameter sun gear 31, and the second sliding engagement member 94 that moves in the axial direction together with the first sliding engagement member 91 as the transmission shaft 92 slides and is non-rotatably supported on the support shaft 8, the clutch 23 is switched depending on the position of the first sliding engagement member 91 (the position of the transmission shaft 92 inside the support shaft 8, the sliding position), and the low brake 21 and the second brake 22 are switched depending on the position of the second sliding engagement member 94 (the position of the transmission shaft 92 inside the support shaft 8, the sliding position).

According to this configuration, it is possible to selectively operate any one of the low brake 21, the second brake 22, and the clutch 23 simply by sliding the first sliding engagement member 91 and the second sliding engagement member 94 in the axial direction.

(6) In the state where the gear position is switched to the first position, the low brake 21 fixes the carrier 50 to the support shaft 8 to non-rotatably lock the carrier 50, and the pedaling force received from the small-diameter sun gear 31 is decelerated and transmitted from the ring gear 60 to the rear wheel 3b.

According to this configuration, when the assist torque from the electric motor 70 cannot be obtained due to the power storage unit 9b running out of charge or the like, the rider can switch the gear position to the first position, which has the largest reduction ratio, to increase the drive torque generated by the pedaling force by deceleration. Therefore, when the assist torque from the electric motor 70 cannot be obtained, a load of the rider can be prevented from increasing.

(7) In the state where the gear position is switched to the second position, the second brake 22 fixes the large-diameter sun gear 32 to the support shaft 8 to non-rotatably lock the large-diameter sun gear 32, and the pedaling force received from the small-diameter sun gear 31 is decelerated and transmitted from the ring gear 60 to the rear wheel 3b.

According to this configuration, when traveling up a steep hill, the rider can switch the gear position to the second position, which has a gear ratio on a reduction side, to reduce the required pedaling force. Therefore, the load of the rider can be prevented from increasing.

(8) In the state where the gear position is switched to the third position, the clutch 23 connects the small-diameter sun gear 31 and the carrier 50 to rotate the small-diameter sun gear 31 and the carrier 50 together, and the pedaling force received from the small-diameter sun gear 31 is transmitted from the ring gear 60 to the rear wheel 3b at the same speed.

According to this configuration, the power assist unit 100 is configured such that the input and the output have the same speeds in a third speed, and each of a first speed and a second speed has a gear ratio on the reduction side. Accordingly, in the state where the gear position is switched to the third speed which is the highest position and is used most frequently, the pedaling force of the rider is transmitted to the case 10 without passing through components of the planetary gear mechanism 20. Therefore, the durability of the power assist unit 100 can be improved.

Although the embodiment of the present invention has been described above, the above embodiment is merely an application example of the present invention and is not intended to limit the technical scope of the present invention to the specific configuration of the above embodiment. The scope of the present invention is defined by the appended claims.

For example, in the above embodiment, the power assist unit 100 is attached to the rear wheel 3b together with the driven sprocket 6b. However, the power assist unit 100 may be attached to the crankshaft 7c together with the drive sprocket 6a. In this case, the rider may pedal the crank arms 7b via the pedals 7, and the pedaling force (drive torque) transmitted from the crank arms 7b to the crankshafts 7c may be input to the small-diameter sun gear 31. The output of the power assist unit 100 may be transmitted from the ring gear 60 to the drive sprocket 6a via the case 10, and then transmitted to the driven sprocket 6b via the chain 6c wound between the drive sprocket 6a and the driven sprocket 6b, thereby rotating the rear wheel 3b.

In the above embodiment, the rotor 72 is a so-called outer rotor provided on the outer circumference of the stator 71. Alternatively, the stator may be provided on an outer circumferential side, and the rotor may be a so-called inner rotor that rotates on an inner circumference of the stator.

### DESCRIPTION OF REFERENCE SIGNS

- 100: power assist unit

- 1: bicycle (power assisted bicycle)
- 3b: rear wheel (drive wheel)
- 6b: driven sprocket (sprocket)
- 7: pedal
- 8: support shaft
- 10: case
- 21: low brake (first brake)
- 22: second brake (second brake)
- 23: clutch
- 31: small-diameter sun gear
- 32: large-diameter sun gear
- 41: short planetary gear (first planetary gear)
- 42: long planetary gear (second planetary gear)
- 50: carrier (shared carrier)
- 60: ring gear
- 70: electric motor
- 73: gear mechanism
- 81: one-way clutch
- 91: first sliding engagement member
- 92: transmission shaft
- 94: second sliding engagement member

## Claims

1. A power assist unit (100) for a bicycle (1), comprising:
a small-diameter sun gear (31) configured to receive a pedaling force from a rider;
a large-diameter sun gear (32) formed with a diameter larger than the small-diameter sun gear (31);
a first planetary gear (41) configured to mesh with the small-diameter sun gear (31);
a second planetary gear (42) configured to mesh with the first planetary gear (41) and the large-diameter sun gear (32);
a shared carrier (50) configured to connect the first planetary gear (41) and the second planetary gear (42) to rotatably support the first planetary gear (41) and the second planetary gear (42);
a ring gear (60) configured to mesh with the second planetary gear (42);
a first brake (21) configured to lock rotation of the shared carrier (50);
a second brake (22) configured to lock rotation of the large-diameter sun gear (32);
a clutch (23) configured to detachably couple the small-diameter sun gear (31) and the shared carrier (50);
an electric motor (70) configured to assist a drive force in accordance with the pedaling force from the rider;
a gear mechanism (73) configured to transmit the drive force output from the electric motor (70) to the ring gear (60); and
a case (10) fixed to the ring gear (60) and configured to transmit at least one of the pedaling force and the drive force to a drive wheel (3b) of the bicycle (1).

2. The power assist unit (100) for the bicycle (1) according to claim 1, wherein
the case (10) rotatably supports the drive wheel (3b) with respect to a support shaft (8).

3. The power assist unit (100) for the bicycle according to claim 2, further comprising:
a one-way clutch (81) configured to switch between a state where the pedaling force from the rider is transmitted to the small-diameter sun gear (31) and a state where rotation of the small-diameter sun gear (31) is not transmitted to a pedal of the bicycle (1).

4. The power assist unit (100) for the bicycle (1) according to claim 2, further comprising:
a transmission shaft (92) configured to slide inside the support shaft (8) in an axial direction and switch to selectively operate the first brake (21), the second brake (22), and the clutch.

5. The power assist unit (100) for the bicycle (1) according to claim 4, further comprising:
a first sliding engagement member (91) configured to slide in the axial direction with respect to the small-diameter sun gear (31) and engage with the small-diameter sun gear (31) to rotate together with the small-diameter sun gear (31); and
a second sliding engagement member (94) configured to move in the axial direction together with the first sliding engagement member (91) as the transmission shaft (92) slides, and non-rotatably supported by the support shaft (8), wherein
the clutch (23) is switched depending on a position of the first sliding engagement member (91), and the first brake (21) and the second brake (22) are switched depending on a position of the second sliding engagement member (94).

6. The power assist unit (100) for the bicycle (1) according to any one of claims 2 to 5, wherein
in a state where a gear position is switched to a first position, the first brake (21) fixes the shared carrier (50) to the support shaft (8) to non-rotatably lock the shared carrier (50), and the pedaling force received from the small-diameter sun gear (31) is decelerated and transmitted from the ring gear (60) to the drive wheel (3b).

7. The power assist unit (100) for the bicycle (1) according to any one of claims 2 to 5, wherein
in a state where a gear position is switched to a second position, the second brake (22) fixes the large-diameter sun gear (32) to the support shaft (8) to non-rotatably lock the large-diameter sun gear (32), and the pedaling force received from the small-diameter sun gear (31) is decelerated and transmitted from the ring gear (60) to the drive wheel (3b).

8. The power assist unit (100) for the bicycle (1) according to any one of claims 2 to 5, wherein
in a state where a gear position is switched to a third position, the clutch connects the small-diameter sun gear (31) and the shared carrier (50) to rotate the small-diameter sun gear (31) and the shared carrier (50) together, and the pedaling force received from the small-diameter sun gear (31) is transmitted from the ring gear (60) to the drive wheel (3b) at a same speed.

9. A power assisted bicycle (1), comprising a power assist unit (100) according to claim 1.

## Patentansprüche

1. Hilfskrafteinheit (100) für ein Fahrrad (1), umfassend:
ein Sonnenrad (31) mit kleinem Durchmesser, das konfiguriert ist, um eine Pedalkraft von einem Fahrer aufzunehmen;
ein Sonnenrad (32) mit großem Durchmesser, das mit einem Durchmesser ausgebildet ist, der größer als der des Sonnenrads (31) mit kleinem Durchmesser ist;
ein erstes Planetenrad (41), das konfiguriert ist, um mit dem Sonnenrad (31) mit kleinem Durchmesser in Eingriff zu stehen;
ein zweites Planetenrad (42), das konfiguriert ist, um mit dem ersten Planetenrad (41) und dem Sonnenrad (32) mit großem Durchmesser in Eingriff zu stehen;
einen gemeinsamen Träger (50), der konfiguriert ist, um das erste Planetenrad (41) und das zweite Planetenrad (42) zu verbinden, um das erste Planetenrad (41) und das zweite Planetenrad (42) drehbar zu stützen;
ein Hohlrad (60), das konfiguriert ist, um mit dem zweiten Planetenrad (42) in Eingriff zu stehen;
eine erste Bremse (21), die konfiguriert ist, um die Drehung des gemeinsamen Trägers (50) zu blockieren;
eine zweite Bremse (22), die konfiguriert ist, um die Drehung des Sonnenrads (32) mit großem Durchmesser zu blockieren;
eine Kupplung (23), die konfiguriert ist, um das Sonnenrad (31) mit kleinem Durchmesser und den gemeinsamen Träger (50) lösbar zu koppeln;
einen Elektromotor (70), der konfiguriert ist, um eine Antriebskraft gemäß der Pedalkraft von dem Fahrer zu unterstützen;
einen Getriebemechanismus (73), der konfiguriert ist, um die von dem Elektromotor (70) ausgegebene Antriebskraft auf das Hohlrad (60) zu übertragen; und
ein Gehäuse (10), das an dem Hohlrad (60) befestigt ist und konfiguriert ist, um mindestens eine von der Pedalkraft und der Antriebskraft auf ein Antriebsrad (3b) des Fahrrads (1) zu übertragen.

2. Hilfskrafteinheit (100) für das Fahrrad (1) nach Anspruch 1, wobei
das Gehäuse (10) das Antriebsrad (3b) in Bezug auf eine Stützwelle (8) drehbar stützt.

3. Hilfskrafteinheit (100) für das Fahrrad nach Anspruch 2, ferner umfassend:
eine Einwegkupplung (81), die konfiguriert ist, um zwischen einem Zustand, in dem die Pedalkraft von dem Fahrer auf das Sonnenrad (31) mit kleinem Durchmesser übertragen wird, und einem Zustand, in dem die Drehung des Sonnenrads (31) mit kleinem Durchmesser nicht auf ein Pedal des Fahrrads (1) übertragen wird, umzuschalten.

4. Hilfskrafteinheit (100) für das Fahrrad (1) nach Anspruch 2, ferner umfassend:
eine Übertragungswelle (92), die konfiguriert ist, um innerhalb der Stützwelle (8) in einer axialen Richtung zu gleiten und umzuschalten, um die erste Bremse (21), die zweite Bremse (22) und die Kupplung selektiv zu betätigen.

5. Hilfskrafteinheit (100) für das Fahrrad (1) nach Anspruch 4, ferner umfassend:
ein erstes Gleiteingriffselement (91), das konfiguriert ist, um in der axialen Richtung in Bezug auf das Sonnenrad (31) mit kleinem Durchmesser zu gleiten und mit dem Sonnenrad (31) mit kleinem Durchmesser in Eingriff zu kommen, um sich zusammen mit dem Sonnenrad (31) mit kleinem Durchmesser zu drehen; und
ein zweites Gleiteingriffselement (94), das konfiguriert ist, um sich zusammen mit dem ersten Gleiteingriffselement (91) in der axialen Richtung zu bewegen, wenn die Übertragungswelle (92) gleitet, und nicht drehbar durch die Stützwelle (8) gestützt wird, wobei
die Kupplung (23) in Abhängigkeit von einer Position des ersten Gleiteingriffselements (91) geschaltet wird, und die erste Bremse (21) und die zweite Bremse (22) in Abhängigkeit von einer Position des zweiten Gleiteingriffselements (94) geschaltet werden.

6. Hilfskrafteinheit (100) für das Fahrrad (1) nach einem der Ansprüche 2 bis 5, wobei
in einem Zustand, in dem eine Gangposition in eine erste Position geschaltet wird, die erste Bremse (21) den gemeinsam genutzten Träger (50) an der Stützwelle (8) fixiert, um den gemeinsam genutzten Träger (50) nicht drehbar zu verriegeln, und die Pedalkraft, die von dem Sonnenrad (31) mit kleinem Durchmesser aufgenommen wird, abgebremst und von dem Hohlrad (60) auf das Antriebsrad (3b) übertragen wird.

7. Hilfskrafteinheit (100) für das Fahrrad (1) nach einem der Ansprüche 2 bis 5, wobei
in einem Zustand, in dem eine Gangposition in eine zweite Position geschaltet wird, die zweite Bremse (22) das Sonnenrad (32) mit großem Durchmesser an der Stützwelle (8) fixiert, um das Sonnenrad (32) mit großem Durchmesser nicht drehbar zu verriegeln, und die Pedalkraft, die von dem Sonnenrad (31) mit kleinem Durchmesser aufgenommen wird, abgebremst und von dem Hohlrad (60) auf das Antriebsrad (3b) übertragen wird.

8. Hilfskrafteinheit (100) für das Fahrrad (1) nach einem der Ansprüche 2 bis 5, wobei
in einem Zustand, in dem eine Gangposition in eine dritte Position geschaltet wird, die Kupplung das Sonnenrad (31) mit kleinem Durchmesser und den gemeinsam genutzten Träger (50) verbindet, um das Sonnenrad (31) mit kleinem Durchmesser und den gemeinsam genutzten Träger (50) zusammen zu drehen, und die Pedalkraft, die von dem Sonnenrad (31) mit kleinem Durchmesser aufgenommen wird, von dem Hohlrad (60) auf das Antriebsrad (3b) mit einer gleichen Geschwindigkeit übertragen wird.

9. Hilfskraftunterstütztes Fahrrad (1), umfassend eine Hilfskrafteinheit (100) nach Anspruch 1.

## Revendications

1. Unité d'assistance électrique (100) pour une bicyclette (1), comprenant :
un planétaire de petit diamètre (31) configuré pour recevoir une force de pédalage d'un cycliste ;
un planétaire de grand diamètre (32) formé avec un diamètre plus grand que le planétaire de petit diamètre (31) ;
un premier engrenage planétaire (41) configuré pour s'engrener avec le planétaire de petit diamètre (31) ;
un second engrenage planétaire (42) configuré pour s'engrener avec le premier engrenage planétaire (41) et le planétaire de grand diamètre (32) ;
un support partagé (50) configuré pour relier le premier engrenage planétaire (41) et le second engrenage planétaire (42) pour supporter en rotation le premier engrenage planétaire (41) et le second engrenage planétaire (42) ;
une couronne dentée (60) configurée pour s'engrener avec le second engrenage planétaire (42) ;
un premier frein (21) configuré pour bloquer la rotation du support partagé (50) ;
un second frein (22) configuré pour bloquer la rotation du planétaire de grand diamètre (32) ;
un embrayage (23) configuré pour coupler de manière détachable le planétaire de petit diamètre (31) et le support partagé (50) ;
un moteur électrique (70) configuré pour assister une force d'entraînement en fonction de la force de pédalage du cycliste ;
un mécanisme d'engrenage (73) configuré pour transmettre la force d'entraînement délivrée par le moteur électrique (70) à la couronne dentée (60) ; et
un boîtier (10) fixé à la couronne dentée (60) et configuré pour transmettre au moins l'une de la force de pédalage et de la force d'entraînement à une roue motrice (3b) de la bicyclette (1).

2. Unité d'assistance électrique (100) pour la bicyclette (1) selon la revendication 1, dans laquelle
le boîtier (10) supporte en rotation la roue motrice (3b) par rapport à un arbre de support (8).

3. Unité d'assistance électrique (100) pour la bicyclette selon la revendication 2, comprenant en outre :
un embrayage unidirectionnel (81) configuré pour commuter entre un état où la force de pédalage du cycliste est transmise au planétaire de petit diamètre (31) et un état où la rotation du planétaire de petit diamètre (31) n'est pas transmise à une pédale de la bicyclette (1).

4. Unité d'assistance électrique (100) pour la bicyclette (1) selon la revendication 2, comprenant en outre :
un arbre de transmission (92) configuré pour coulisser à l'intérieur de l'arbre de support (8) dans une direction axiale et commuter pour actionner sélectivement le premier frein (21), le second frein (22) et l'embrayage.

5. Unité d'assistance électrique (100) pour la bicyclette (1) selon la revendication 4, comprenant en outre :
un premier élément d'engagement coulissant (91) configuré pour coulisser dans la direction axiale par rapport au planétaire de petit diamètre (31) et s'engager avec le planétaire de petit diamètre (31) pour tourner conjointement avec le planétaire de petit diamètre (31) ; et
un second élément d'engagement coulissant (94) configuré pour se déplacer dans la direction axiale conjointement avec le premier élément d'engagement coulissant (91) lorsque l'arbre de transmission (92) coulisse, et supporté de manière non rotative par l'arbre de support (8), dans laquelle
l'embrayage (23) est commuté en fonction d'une position du premier élément d'engagement coulissant (91), et le premier frein (21) et le second frein (22) sont commutés en fonction d'une position du second élément d'engagement coulissant (94).

6. Unité d'assistance électrique (100) pour la bicyclette (1) selon l'une quelconque des revendications 2 à 5, dans laquelle
dans un état où une position d'engrenage est commutée à une première position, le premier frein (21) fixe le support partagé (50) à l'arbre de support (8) pour verrouiller de manière non rotative le support partagé (50), et la force de pédalage reçue du planétaire de petit diamètre (31) est décélérée et transmise de la couronne dentée (60) à la roue motrice (3b).

7. Unité d'assistance électrique (100) pour la bicyclette (1) selon l'une quelconque des revendications 2 à 5, dans laquelle
dans un état où une position d'engrenage est commutée à une seconde position, le second frein (22) fixe le planétaire de grand diamètre (32) à l'arbre de support (8) pour verrouiller de manière non rotative le planétaire de grand diamètre (32), et la force de pédalage reçue du planétaire de petit diamètre (31) est décélérée et transmise de la couronne dentée (60) à la roue motrice (3b).

8. Unité d'assistance électrique (100) pour la bicyclette (1) selon l'une quelconque des revendications 2 à 5, dans laquelle
dans un état où une position d'engrenage est commutée à une troisième position, l'embrayage relie le planétaire de petit diamètre (31) et le support partagé (50) pour faire tourner le planétaire de petit diamètre (31) et le support partagé (50) ensemble, et la force de pédalage reçue du planétaire de petit diamètre (31) est transmise de la couronne dentée (60) à la roue motrice (3b) à une même vitesse.

9. Bicyclette assistée (1), comprenant une unité d'assistance électrique (100) selon la revendication 1.
